# EUROPEAN PATENT APPLICATION

(11) **EP 2 058 135 A1**
(43) Date of publication of application: **13.05.2009**
(21) Application number: 07120194.1
(22) Date of filing: 07.11.2007
(51) Int. Cl.: B41J 3/00, B01L 3/02, B01J 19/00

(54) **Printer device and method for producing biological test arrays**

(71) Applicant: Koninklijke Philips Electronics N.V., 5621 BA Eindhoven (NL)
(72) Inventor: The designation of the inventor has not yet been filed
(74) Representative: Rüber, Bernhard Jakob

(57) **Abstract**

The invention relates to a printer device for producing biological test arrays by depositing an array of bioactive fluids onto a substrate, the device comprising print heads with nozzles for depositing droplets of the bioactive fluid onto the substrates, positioning means for positioning the print heads relative to the substrates, first detection means for detecting the landing position of a droplet relative to the position of the nozzle from which it originates, second detection means for detecting the position of the substrates, and control means coupled to the detection means and the positioning means. The control means are programmed to compare the position of a substrate and the landing position of the droplets, and adjust the position of the print heads relative to said substrate upon depositing a droplet onto said substrate. The invention further relates to the use of such a device in the production of biological test arrays. The invention also relates to a method for producing a biological test array. The invention moreover relates to a biological test array. The method according to the invention is failure proof, and results in biological test arrays of superior quality.

## Description

### FIELD OF THE INVENTION

The invention relates to a printer device for producing biological test arrays by depositing an array of bioactive fluids onto a substrate. The invention further relates to the use of such a device in the production of biological test arrays. The invention also relates to a method for producing a biological test array. The invention moreover relates to a biological test array.

### BACKGROUND OF THE INVENTION

Arrays of bioactive fluids on a substrate are used in biological test assays, for instance for the analysis of human blood or tissue samples for the presence of certain bacteria, viruses or fungi. The arrays consist of spots with a selective binding capacity for a predetermined indicative factor, such as a protein, DNA or RNA sequence that belongs to a specific bacterium, virus or fungus. By having spots with different specificity for different factors, the array may be used to assay for various different factors at the same time. The presence of an indicative factor may be visualized for instance by fluorescent labelling of the tested sample, which results in a detectable fluorescence on the spot the specific factor adheres to. Using such arrays enables high-throughput screening of samples for a large amount of factors indicative of certain bacteria, viruses and/or fungi in a single run.

A suitable bioactive fluid may for instance be a solution of a specific DNA sequence or antibody. The printing is usually done by a printing device especially designed for depositing bioactive fluids on a substrate, usually by a different print head for each different bioactive fluid to be included in the array. Especially for diagnostics, the bioactive fluids have to be positioned onto the substrate in a very precise and accurate manner. Otherwise unreliable test results are obtained. Moreover, printing of an incorrect bioactive fluid on a particular substrate position should be avoided at all times. Being able to trace and identify the bioactive fluids at all times is an important need.

Being able to increase production speed is another important requirement. Printing devices provided with multi-nozzle print heads have been proposed to increase production speed, but this goes at the detriment of printing accuracy and reliability. There is at present no multi-nozzle printing device available that can handle many bioactive fluids at a time and provide the high printing accuracy and reliability levels needed. Moreover, current printing devices for bioactive fluids lack traceability measures. Furthermore, current systems lack the flexibility with regard to the pattern to be printed in terms of spot sizes, spot pitches and layout.

It would be very desirable to provide a printing device for producing biological test arrays on an industrial scale by depositing an array of bioactive fluids onto a substrate, the device having flexibility regarding the pattern to be printed, having full quality control over its operation, providing traceability, and being able to deposit bioactive fluids with a very high accuracy and reliability.

### SUMMARY OF THE INVENTION

It is an object of the present invention to provide a printer device for producing more reliable biological test arrays at industrially required production speeds than known hitherto. It is a further object to use such a device in the production of more reliable biological test arrays. It is still a further object to provide a method for producing more reliable biological test arrays.

These and other objects are achieved by a printer device for producing biological test arrays by depositing an array of bioactive fluids onto a substrate, the device comprising at least one print head provided with at least one nozzle for depositing a droplet of a bioactive fluid onto the substrate, positioning means for positioning the print head relative to the substrate, first detection means for detecting the landing position of a droplet relative to the position of the nozzle from which it originates, and second detection means for detecting the position of the substrates, as well as control means coupled to the detection means and the positioning means, wherein the control means are programmed to compare the position of the substrates and the landing position of the droplets, and adjust the position of the print head relative to the substrate such that the bioactive fluids are printed on the correct position. The second detection means are preferably also used to detect the position of the printed dots after printing.

According to the invention, a printer device for producing biological test arrays by depositing droplets of a bioactive fluid onto substrates in a plurality of substrate locations is provided. The device comprises first detection means for detecting the landing position of a droplet relative to the position of the nozzle from which it originates, and second detection means for detecting the position of the substrates. Moreover, control means are provided that are programmed to compare the position of a substrate and the landing position of the droplets, and adjust the position of the print head relative to the substrate upon depositing a droplet onto said substrate, such that the bioactive fluids are printed on the correct location. The printing device according to the invention allows to produce biological test arrays on an industrial scale with a high accuracy and reliability, without having to align and/or produce the print heads and or substrates very accurately. Indeed the printing device according to the invention "forgives" these kinds of misalignments and/or production errors and is self-correcting.

Although the printing device according to the invention may be provided with a print head with one nozzle only, the device preferably comprises a plurality of single nozzle print heads and/or a multi nozzle print head and/or a plurality of multi nozzle print heads, wherein each print head may contain a different bioactive fluid, arranged in a print head holder. Thereby, it is possible to eject a plurality of droplets out of one single print head at one time and also to process multiple and different bioactive fluids in one run. This speeds up the printing process considerably.

In a preferred embodiment of the printer device according to the invention, the device is characterized in that it comprises print heads with multiple nozzles, and the control means are programmed to compare the position of a substrate and the mean landing position of all droplets, originating from a print head, and adjust the position of the print head relative to said substrate upon depositing droplets onto said substrate.

To position the print heads relative to said substrate the printing device preferably comprises a XY print table and a printing bridge, the print table being mounted moveably relative to the printing bridge along a first direction and the print heads being mounted to the printing bridge such that each print head is moveable relative to the printing bridge along a second direction. Thereby it is possible to print or deposit droplets of a bioactive fluid to a large area of application such that the production of printed arrays can be made quite cost effective. In general, a plurality of individual substrates is printed as one batch, i.e. by moving the substrates back and forth underneath the print heads.

The substrates generally comprise separate membranes held by a membrane holder. Although any suitable substrate may be used, the substrate is preferably a flat substrate, a structured substrate or a porous substrate. More preferably, the substrate is a nylon membrane, nitrocellulose, or PVDF membrane, or a coated porous membrane, or an impermeable substrate (such as glass, plastic), or an impermeable substrate covered with a porous layer. The substrates are preferably arranged in a regular pattern, for instance a rectangular pattern. A plurality of separate membranes may be produced simultaneously by the use of the inventive printing device. Each substrate - or membrane - is printed with a plurality of droplets. These are deposited onto the substrate in a plurality of substrate locations. The substrate locations are separated from each other by at least the average diameter of a droplet positioned at one of the substrate locations, and together form a particular pattern of the biological array. It is possible therefore to precisely and independently locate different droplets of a bioactive fluid at precise locations on the substrate. It is also possible and advantageous to place a plurality of droplets on one and the same substrate location.

A preferred embodiment of the printer device according to the invention has first detection means comprising an image sensor, aimed at detecting the trajectory of the droplets. The image sensor generally speaking converts the visual image of the trajectory to an electric signal, which may be processed. Suitable image sensors include an array of charge-coupled devices (CCD) or CMOS sensors such as active pixel sensors.

A further preferred embodiment of the printer device according to the invention is characterized in that the first detection means comprise at least one microscope objective, equipped with the image sensor, at least one stroboscope unit, at least one adjustable mirror to guide the optical axis of the droplet measurement volume to the at least one microscope objective, and means to measure the position of the droplet relative to the position of the nozzle from which it originates.

In still another preferred embodiment, the printer device according to the invention comprises second detection means. The second detection means preferably comprise illumination means for illuminating the substrates from one side, and at least one image sensor positioned on the other side of the substrates, and aimed at detecting the light transmitted through the substrates.

In an even more preferred embodiment, the printer device is provided with third detection means, comprising an acoustical sensor. It is an advantage of the present embodiment that it becomes possible to monitor the state of the printing process, and more in particular the state of the print head by means of measurement of the behavior of the transducer and/or of the transducer comprising the substance. The transducer is a - preferably electromechanical - transducer applying mechanical and hydro-acoustical waves into the print head. These waves are captured by the acoustical sensor. By means of applying mechanical and hydro-acoustical waves into the print head filled with the liquid to print, the system comprising the print head and the liquid is reacting in a different manner if the state of the print head has changed and/or is changing over time. Some changes may occur gradually over time. In the context of this application the terminology "state of the print head" should be interpreted to include a plurality of properties, such as the extent of filling of the print head and/or the liquid reservoir, the presence of air bubbles in the printable liquid, and the value of the underpressure used to maintain the correct position of the meniscus in the nozzle and to avoid flooding of the nozzle. Preferably, the third detection means are adapted to measure an acoustical characteristic of the nozzle, as described above, and the control means are programmed to determine a defect by comparison of the measured characteristic of the nozzle with a predetermined characteristic of the nozzle.

In a preferred embodiment of the present invention, the transducer is a piezoelectric transducer. Thereby, it is especially possible to use the same transducer for ejecting the droplets and for measuring the behavior of the fluid inside the print head. Upon ejecting a droplet, the ensuing pressure and deformation waves are captured by the transducer, and a pressure time trace is typically recorded. By Fourier transformation of such a trace in the time domain into a spectrum in the frequency domain, characteristic frequencies are deduced. According to the invention changes in the frequency spectrum may be attributed to changes in the state of the print head. Suitable methods are described in European Patent applications EP 1 378 359 A1, EP 1 378 360 A1 and EP 1 378 361 A1, all by M.A. Gröninger, P.G.M. Kruijt, H. Reinten, R.H. Schippers and J.M.M. Simons. Another method makes use of some data points from the recorded trace in the time domain. These data points contain information about the basic frequency and the damping.

It may further have advantages to characterize the printer device according to the invention in that the printer device comprises print heads, provided with identification means, and the device further comprises reading means to read information contained in the identification means. It is an advantage of the ink jet device according to the present invention that it becomes possible to know about exactly which substance is present inside the print head at a particular moment in time, and to know how much of this substance lands on which position. It should be noted that in the context of this embodiment with print heads is also meant any auxiliary part thereof, such as a container for the bioactive fluid, connected to the print head. In this particular embodiment, the containers with a particular bioactive fluid can be constantly monitored during their processing since they are provided with identification means. By further providing reading means, which can read the information embodied in the identification means, it not only becomes possible to identify each print head as such, but also to decide whether a particular print head is in the right position on the printer device. Indeed the read information ('ist') can in general terms be compared to the desired information ('soll'), on the basis of which comparison a particular print head can be rejected or accepted. In another embodiment the device couples the control means to the reading means and programs the control means such as to correct any mismatch between the read information ('ist') and the desired information ('soll'). In this way correct functioning of the printer device is guaranteed. Suitable identification means comprise a barcode, a coded read-only chip, and/or a coded RF-ID chip. Such chips are known per se, for instance as a resonance label in anti-theft systems. A coded RF-ID chip can be read or interrogated by a suitable wireless RF reader over some distance. This allows to locate the presence of particular containers from a central position in a warehouse for instance. Such a reader is typically provided with a transmitting antenna, able to communicate through radio frequency waves with the RF-ID chip. An energetic signal of any kind is emitted by the transmitting antenna to the RF-ID chip, which signal is subsequently 'processed' by the chip, and thereafter in modified form re-emitted to a receiver with receiving antenna, also incorporated in the reader. The chip is thus subjected to an inquiry by the transmitting antenna and emits, depending on the specific circumstances wherein the container finds itself, a response signal to the receiver. By adapting the emitting frequencies, the range over which such chips may be read can be modified, for instance extended to larger distances.

The invention will now be explained in greater detail by means of the enclosed figures, without however being limited thereto.

### BRIEF DESCRIPTION OF THE DRAWINGS

In the figures
- Figure 1: illustrates schematically a top view of an embodiment of the printer device of the present invention;
- Figure 2: illustrates schematically a front view of the embodiment of the printer device of figure 1;
- Figure 3: illustrates schematically a side view of the embodiment of the printer device of figure 1;
- Figure 4: illustrates schematically a top view of an embodiment of the printer device in the droplet visualisation position;
- Figure 5: illustrates schematically a top view of an embodiment of the printer device in the end position;
- Figure 6: illustrates schematically a possible printing path, as carried out by the printer device according to the invention;
- Figure 7: schematically illustrates an embodiment of the printer device according to the invention;
- Figure 8: schematically illustrates a print head holder and membrane; and fmally
- Figure 9: schematically illustrates an embodiment of the method to print dot patterns with variable pitch.

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn to scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

### DETAILED DESCRIPTION OF EMBODIMENTS

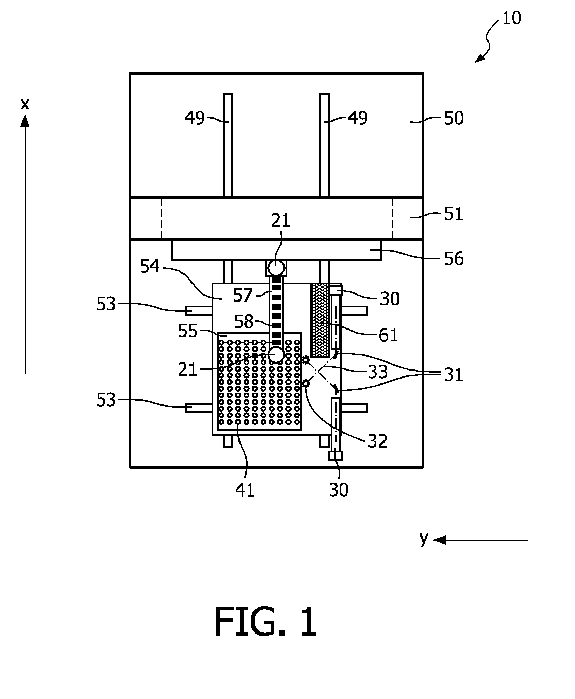

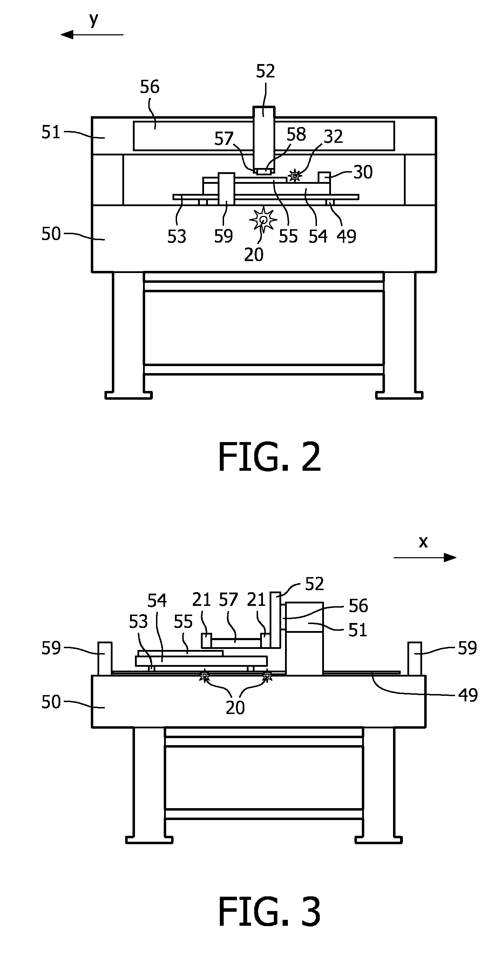

In Figure 1, a schematic top view of the ink jet device 10 according to the present invention is shown. On a print table 50 a fixture plate 55 is mounted on a linear X-Y stage 54, allowing for motions of the fixture plate 55 in the X direction along guiding rails 49 and in the Y direction of the fixture plate 55 along guiding rails 53. The print table 50 is preferably provided in the form of a granite table. Alternatively, another very heavy material can also be used. The granite table functions as a support for the precision XY-stage 54. Typically a stroke in the X-direction of 700 mm and a stroke in the Y direction of 400 mm is provided. Optical rulers are used to determine the position in both the X- and the Y-direction. Virtually any resolution may be achieved, but a typical resolution is 0,1 micron. The straightness of both motions in X- and Y-direction is usually measured and is better than 10 micron. The absolute error in positioning is typically 10 micron, the repetitive error being smaller than 1 micron. As the positions in X-direction and Y-direction are preferably controlled by the optical rulers, and the linear bearings are preferably preloaded, there is little or no mechanical play. Fixture plate 55 may also be rotatable about the Z-axis (perpendicular to the plane defined by the X- and Y-axes) over a small angle for alignment purposes. In fixture plate 55, a number of substrates, i.e. membranes 41 are fixed through membrane holders (not shown). After printing the bioactive fluid onto the membranes, membrane holder and spotted membrane 41 together constitute the final product. A rigid printing printing bridge 51 is rigidly mounted relative to print table 50. The rigid printing bridge 51 carries a print head support structure 56 for a print head holder 57. Print head holder 57 is provided with several multi-nozzle print heads 58, each having its own container (not shown) with a bioactive fluid. Each print head is mounted on a linear precision stage allowing for a small motion in Y direction relative to the table co-ordinates X and Y. The position of print head 1 in the Y-direction is denoted by Y₁, of print head 2 by Y₂ and so on until print head N Y_{N}. Print heads 58 are positioned one after the other in the X-direction and each comprises a plurality of nozzles. It is also possible to equip the printer device 10 with a plurality of linear array print heads 58. Suitable print heads 58 are multi nozzle linear array print heads, such as Dimatix® 16 nozzle MEMS print heads (with integrated fluid reservoir), Dimatix® 128 nozzle SE class print heads, or similar print heads, such as those obtainable from the Xaar company, Konica. Filling means (not shown) for providing each print head 58 with its own bioactive fluid are also provided. The stage 54 with fixture plate 55 is moveable along a first direction, the X-direction called the print direction and a second direction, the Y direction, perpendicular to the first direction, to move from one row of substrates to another. Print head holder 57 is provided with N linear stages movable in the Y direction relative to the rigid bridge 51 to allow for correcting misplacement errors of the substrates, by adjusting the positions Y₁, ...Y_{N}. With reference to figure 2 print head holder 57 is mounted on a further linear stage 52 (also called Z-stage) allowing the print head holder 57 together with the print heads 58 to be moved in a third direction, also called the Z-direction. The Z-direction is preferably orthogonal relative to the first and second directions (NB: XY-plane, plane defined by X- and Y-axes). The Z-stage allows for precise vertical positioning of print heads 58. The printer device 10 may also comprise a height detection unit 59, for instance in the form of a laser. Movable stage 54, allowing for X and Y positioning, rigid printing bridge 51 with stages allowing for positioning the N print heads 58 independently from each other over small distances in the Y-direction, in order to correct for small misalignments in the Y-direction and to bring them in their correct positions Y₁,..., Y_{N}, and Z-stage 52 together form the positioning means for positioning the print heads 58 relative to the substrates or membranes 41.. Fixture plate 55 may also be rotatable over an angle about the Z-direction. The first and second directions are orthogonal in the embodiment shown, but this is not necessary. By manoeuvring the fixture plate 55 underneath the print heads 58 and adjusting for small misplacements by setting Y₁,..,Y_{N}, all substrates can be printed by releasing droplets of a bioactive fluid, which is stored in print head 58 or in a reservoir (not shown) integrated with the print head. In this so called "XY-stage concept" or "XY-stage embodiment", the print head 58 is substantially stationary, apart from the possibility for small motions in the Y-direction to position each print head in their correct positions Y₁, ...,Y_{N}. This prevents pressure fluctuations caused by strongly moving the print head. Membranes 41 are mounted in fixture plate 55 at uniform distances in the X- and Y-direction. The distance (also called pitch) in the X-direction may differ from the distance in the Y-direction.

The printer device 10 according to the invention is further provided with first detection means for detecting the droplet trajectory (and calculating the landing position of a droplet relative to the position of the nozzle from which it originates). First detection means comprise two detection cameras 30, for instance in the form of a microscope objective, two light sources 32 (preferably a stroboscope or controllable flash light) positioned in an angle to the optical axis of the detection cameras 30, and mirrors 31 to redirect the light 33 emitted from sources 32 towards cameras 30. The cameras 30 with microscope objectives, mirrors 31 and lights sources 32 are mounted rigidly to print table 54. This set-up is chosen because of space considerations. Not using the mirrors 31 means that the cameras 30 will take much more space and consequently the foot print of the device will be larger. Before the actual printing process starts, all print heads 58 are positioned in their point of departure (Y₁ = 0, ..., Y_{N} = 0). The print table 54 moves the optical set-up (30, 31 and 32) via XY-motions underneath the first print head 58. , such that the trajectory of an ejected droplet can be detected by the detection cameras 30. In that way the droplet position in space is measured in two dimensions. By adjusting the flash delay of the stroboscope or flash light information of the third dimension is added. For a detection camera 30 to be able to see the droplet, light source 32 is provided.. In order to detect the droplet emission characteristics, the droplets 22 have to be illuminated properly by the light source 32. Droplet illumination is carried out by stroboscopic flashing, with the stroboscope being placed on the optical axis of the microscope objective. In this arrangement, the light sources 32 (stroboscopes) are mounted at the edge of the fixture plate 55 below the print level of the substrates 41, as shown in figure 1.. The detection cameras 30 capture the flight path of the ejected droplets, from which the landing position of a droplet relative to the position of the nozzle from which it originated can be calculated. Image analysis software takes data from the recorded camera images. These data are stored and transferred to the control means (usually a computer) controlling the printing program. From these data, the landing position of a droplet relative to the position of the nozzle from which it originated is calculated. By correcting for the deviations in the flight path, it can always be assured that the droplet lands on the predetermined position. If desired, the first detection means (30, 31, 32) may also be used to measure droplet volume, droplet velocity, and Heywood factor, by capturing the area of the droplet with cameras 30 or by measuring the distance traveled by the droplet in the air in between two subsequent measurements.

The printer device 10 is further provided with second detection means for detecting the position of the substrates 41, relative to the print table 50. The second detection means comprise illumination means 20 for illuminating the substrates 41 from one side of fixture plate 55, usually the underside, and image sensors 21 (camera with microscope objective), positioned on the other side of the substrates 41 (or fixture plate 54), and preferably on the print head holder 57, as shown in figure 1. Illumination means 20 emit light through the membranes 41, mounted in fixture plate 55, or more accurately, through the region of the membranes that is available for flow through (the "flow-through region"). The light that passes through the flow through regions is captured by image sensors 21. Image analysis software takes the data from the image sensors 21, stores and transfers these data to the control means. From these data, the position of the substrates 41 with respect to print table 50 can be determined for each substrate 41. Reference marks (so called fiducial marks) may be present on the print table 50 and/or fixture plate 55. By viewing the fiducial marks, it is possible to calibrate or to position the print heads 58 relative to the print table 50 and therefore relative to the membranes 41.

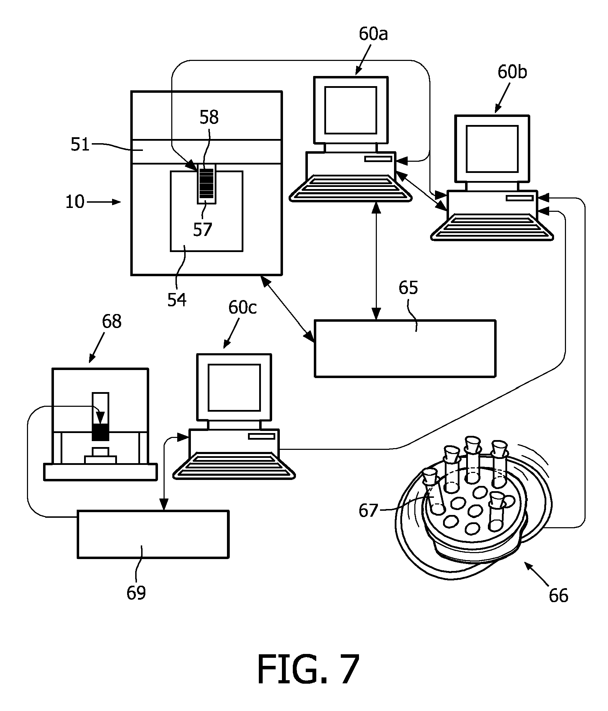

The printer device further comprises control means 60, coupled to the detection means and the positioning means. Control means 60 are programmed such as to compare the position of a substrate 41 and the calculated landing position of the droplets, and adjust the position of the print heads 58 (with respect to the print head holder 57 by adjusting Y₁, .. Y_{N}) relative to said substrate 41 upon depositing a droplet onto said substrate 41 during actual printing. Note that in the Y direction, misplacement errors of substrate 41 are corrected by adjusting Y₁, .. Y_{N}, while in the X direction, a measured misplacement is corrected for by the timing of the deposition event. A typical configuration for the printer device 10 is shown in figure 7. The embodiment shown comprises three computers 60a, 60b and 60c. Computer 60a controls the printer device 10, and more in particular the movement of print heads 58, and XY-stage 54. This control is carried out through printer driver electronics, optical inspection hardware and motion controllers 65. A second computer 60c controls the droplet nozzle inspection system 68 through driver electronics and motion controller 69. Single droplet nozzle inspection system 68 is shown as a separate unit but is preferably part of the printer device 10, as described above. Single droplet nozzle inspection system 68 comprises the first detection unit (30, 31, 32). A separate fill station 66 for cartridges 67 is also provided. Central computer 60b ensures that all data and control actions are coordinated. In figure 7 the arrows clarify the information and communication paths between the different components of the configuration.

The printer device 10 may also comprise a maintenance unit 61, meant to maintain the print heads 58 during the whole printing process (see figure 1). Maintenance unit 61 may for instance comprise cleaning means (not shown). The print heads 58 can be moved to the maintenance unit 61 at all times, for instance when a malfunctioning nozzle has been detected by the control means 60. The basic idea behind the set-up of the printer device comprising three different linear stages in three directions and N stages for the Y₁ to Y_{N} corrections is that all positions, like membranes 41 or spot positions on the membranes 41, the positions of the print heads 58 and/or fluid containers (not shown), as well as the height of the fluid levels and the maintenance unit 61 are all given by X,Y,Z, Y₁ to Y_{N} values and can all be defined by software. So printing follows a certain protocol, given by the print plan. It is essential to the invention that before actual printing starts, the membrane positions 41 and the droplets trajectories for each nozzle in print heads 58 are determined. Based on this information, the position of movable plate 54, and Y₁ to Y_{N} are adjusted in such a way that the exact landing position for each droplet is determined.

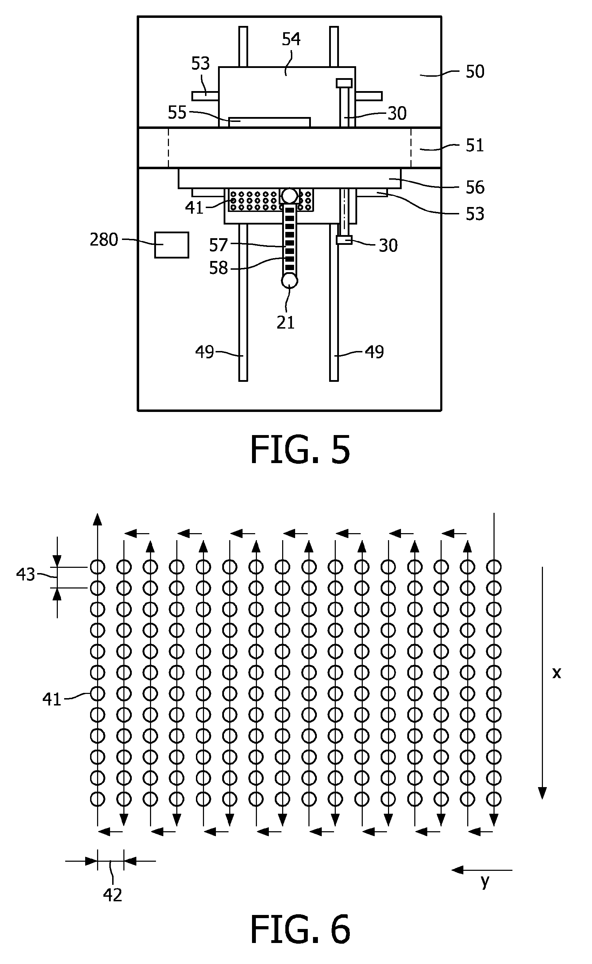

In figure 1 the printer device 10 is shown in a departure position (of the X-direction motion). In a typical print run, a row of membranes 41 is printed in one X-direction run, with corrective motions in the Y direction to position the print heads in their correct positions Y₁ to Y_{N}. Such a printing pattern is shown in figure 7, where a regular array of membranes 41 is shown, with a pitch 42 in the Y-direction, and a pitch 43 in the X-direction. The start position corresponds to the membrane position in the upper right corner of the array of membranes 41. The stage 54 is then moved in the X-direction, in which process the print heads 58 move over a vertical row of membranes 41. The print heads 58 are placed at a pitch being an integer number of times the pitch 43 of substrates 41 in the fixture plate 55 in the print direction (X-direction). This is preferred to arrive at the lowest possible overall print time. In between printing the membranes 41, stage 54 moves at high speed from one membrane position to the next membrane position. During printing of a membrane 41, stage 54 moves at low speed to allow for deposition on the flight of the right amount of bioactive fluid per spot. The number of droplets per spot usually ranges form 10 to 200, to allow for spot volume adjustment by varying the number of droplets. Of course any number of droplets may be used per spot. Based on the measured positions of the substrate spot locations on membranes 41, small corrections are made in positioning the print heads 58 in their correct positions Y₁ to Y_{N} during actual printing, i.e. when the print heads 58 are positioned over a membrane 41. Misplacement errors in X-directions are compensated for by adjusting the timing of deposition. Figure 5 depicts the situation at the end of the first print run in the X-direction, i.e. the end position of the X-direction motion. A displacement of stage 54 in the Y-direction over a distance equal to pitch 42, brings the next row of membranes 41 under the print heads 58, as indicated by the arrow in figure 7. The stage 54 is then moved again from the end position to the start position whereby the next row of membranes 41 is printed. This process continues until all membranes 41 have been printed in the desired spot locations. To improve production rate it is preferred to carry out the print process in a bi-directional fashion (at least in the X-direction), as shown by the arrows in figure 7.

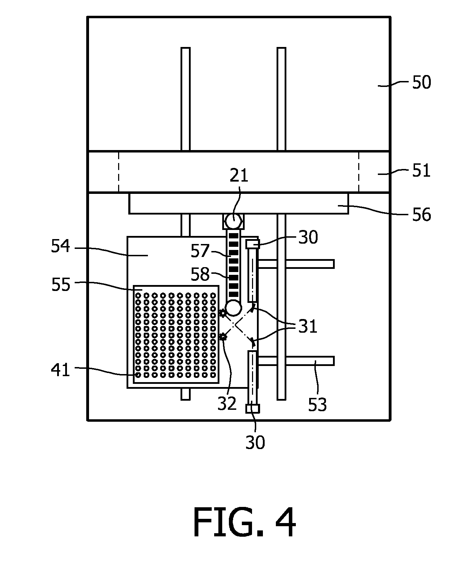

To investigate droplet emission before actual printing of membranes 41, stage 54 moves to the left, as shown in figure 4. In this way, the print heads 58 (all in their departure positions Y₁ = 0, ..., Y_{N} = 0) are maneuvered in the neighborhood of the first detection means (30, 31, 32). As the first detection means to visualize droplet emission are above the ground level, defined by the upper surface of the membranes 41, the holder 57 for the print heads 58 is mounted on a Z-stage. The Z-stage allows to move the print head holder 57 from the print section to the droplet visualization section such that the print heads 58 stay clear from the stroboscopes 32.

It would also be possible to make the stroboscopes 32 movable in the Z-direction to allow the print heads 58 to pass. Still another possibility is to maneuver table 55 with the first detection means (30, 31, 32) such that the print heads 58 stay clear from any part above the ground level. In a typical arrangement, the first detection means (30, 31, 32) comprise two microscope objectives 30 equipped with CCD cameras, two stroboscope units 32 using LumiLED light emitting diodes, two adjustable mirrors 31 to guide the optical axes from the measurement volume to the microscopes 30, as well as means to measure the droplet measuring volume position with respect to the table co-ordinates X, Y, and Z. The microscope objectives 30 have typical working distances from object to front of lens of 130-150 mm. Height detection system 61 is provided to check before printing whether all print heads 58 are able to move freely over the substrates 41.

The printer device 10 further comprises second detection means (20, 21). The embodiment shown in figure 3 comprises two image sensors (also referred to as optical detection units) 21 and two corresponding illumination means 20. Substrates 41 are fixed in fixture plate 55, which is connected to XY-stage 54. Below substrates 41, holes are provided that allow the light emitted by illumination means 20 to shine through substrates 41. The flow through areas of the substrates 41 are detected by the optical detection units 21, preferably microscope objectives equipped with CCD cameras. The second detection means (20, 21) measure the positions (centers of gravity) of the flow through regions of the substrates (membranes) before actual printing. Preferably, the second detection means (20, 21) also detect the position of the spots, printed on each membrane 41 in specific spot locations, directly after printing. To be able to detect the spot locations after printing, the spots preferably still have to be wet, since only wet spots are clearly detectable. Instead of using water as a solvent for the bioactive fluids, slowly evaporating solvents such as ethylene glycol (EG), polyethylene glycol (PEG), and/or dimethyl sulfoxide (DMSO) are preferably used to tune the drying time. These solvents are preferably compatible with the dissolved capture probes.

The information thus collected with respect to the positions of the substrates 41, the fluids in the print heads 58 (provided with integrated reservoirs) and the positions of the droplets are combined by the printing software, loaded in control means 60, to configure the print process. Before printing, the position of all areas to be printed on membranes 41 will be measured, as well as the droplet trajectories for print heads 58. To compensate for placement errors of the membranes 41, as measured by the first and second detection means, all the print heads 58 are mounted on mechanisms to allow for small motions in the Y-direction. After all substrates 41 of one row have been printed, they pass under the second detection means (20, 21) to capture images of the printed still wet spots. Each image is then checked with respect to the presence of the spots that should have been deposited on the membranes during this print run. As the spots can only be checked after the print run is completed for bi-directional printing preferably two optical detection units (20, 21) are provided. When spots are not detected, the printing process stops and the print head 58 that failed will be checked and repaired or replaced. In another embodiment of the method, the not printed dots will be printed in an extra run using a fully functional nozzle by adjusting the appropriate Yᵢ co-ordinate (i corresponding to the number of the failing print head). This option of course slows down the production speed.

The printer device according to the invention may be operated in different modes.

First, selection of bioactive fluids is carried out (see figure 7). This selection may comprise the following steps:
- the capture probe manufacturer delivers bioactive fluids in vials. Preferably these vials already contain labels, barcode and additional information either on paper and/or in digital form;
- on site, the bioactive fluids in the vials are transferred to cartridges, to be mounted later onto print heads 58;
- barcode and label are read, printed and put on all cartridges;
- the cartridges are also provided with a RF tag;
- the central computer 60b links the barcode of the containers to the RF tag code;
- all information associated with the containers is then transferred to the central computer 60b and linked to the RF tag code. This information may include place (name of company, laboratory, etc), type of bioactive fluid, name, chemical composition (nucleic acid sequence, fluorescent label, etc) concentration, classification of danger, the date of manufacturing and date of transfer of content from container to cartridge, the name of the person transferring the fluid from the container to the cartridge, the date of end of use, precautions (max temperature, pH,) to be taken, the volume of fluid in the cartridge, registration of use, barcode code and RF tag code, special ways of working such as the fluids need to be vortexed prior to printing or prior to putting it into the print head, the procedure describing how to get the print head module from fridge temperature to room temperature and how to control this, the procedure describing how to administer the amount of fluid needed for purging, and so on; In this way the content of each cartridge is unmistakably known all the time and the information associated with the content is stored in the central computer 60b.

Upon connecting a cartridge to a print head 58 by clicking them together, the combination of cartridge and print head becomes specific.

A second operating mode comprises storage of the filled containers. This mode comprises the following steps:
- the temperature and humidity histories are initialized in central computer 60b;
- the cartridges are stored in a refrigerator or deep freezer;
- the RF code, date and time are entered in central computer 60b; A third operating mode comprises testing the print heads 58. This mode comprises the following steps:

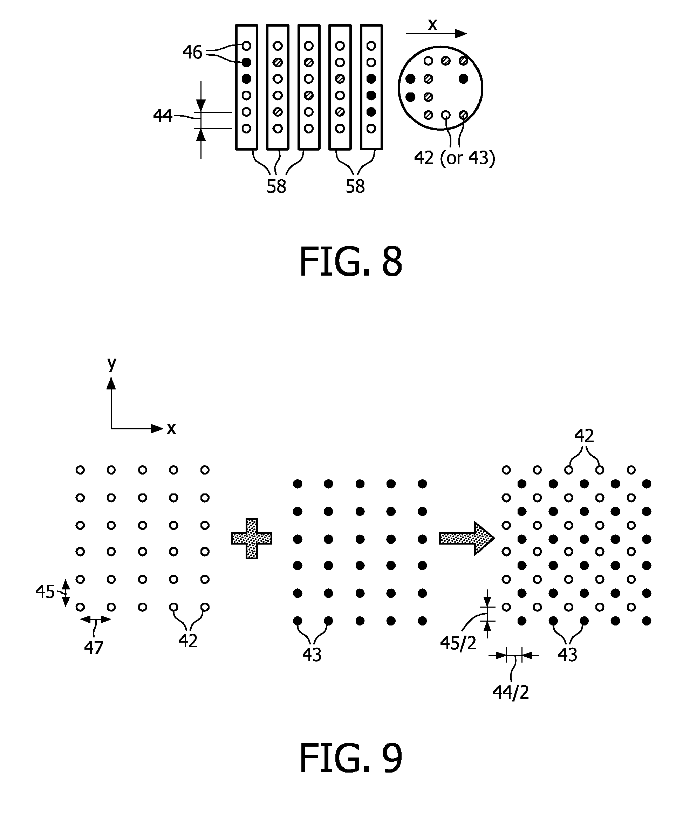

- a cartridge is taken out of its storage place and acclimatized to laboratory conditions;
- the computer 60c for droplet nozzle inspection system 68 is switched to "print head characterization" mode;
- the cartridges are passed through an RFID tag reader, whereby automatically the identification code, date and time are transferred to the central computer 60b. The operator may also enter his name;
- central computer 60b produces the record associated with the bioactive fluid to be tested;
- central computer 60b sends the bioactive fluid and cartridge data to the computer 60c for droplet nozzle inspection system 68, where after the two computers 60b and 60c share the information all the time during testing;
- the cartridge is mounted to print head 58, and the assembly mounted in droplet nozzle inspection system 68;
- a standard subroutine is then carried out to test the droplet ejection of the print head, as described above;
- after testing, the settings are shared with the central computer 60b. This may include pulse shape, under pressure setting, frequency dependence, temperature dependence, finger prints of acoustic signals belonging to proper action. Also droplet volume and straightness per nozzle information are shared with central computer 60b;
- the temperature and the pH history and amount of bioactive fluid used for testing are also kept track of. This information is entered into the computer or is automatically tracked and stored in the central computer;
- the print head with cartridge is then removed from droplet nozzle inspection system 68;
- the nozzles are sealed with tape and the print head with cartridge is packed in an electrostatic save bag, eventually filled with dry or moist nitrogen;
- the packed print head is then stored in a refrigerator or freezer;
- the record associated with the fluid just tested (the system automatically adds date and time) is then closed;
- all data is then removed from the computer 60c. A fourth operating mode comprises defining the printing pattern. This mode comprises the following steps:
   - switching the computer for printer control to "define pattern" configuration;
   - define the pattern of the different spots on each membrane 41 according to the desired design;
   - checking through central computer 4b the availability of the bioactive fluids. The printer device according to the invention can print virtually any pattern, including square patterns but also hexagonal patterns as shown in figure 9 on the right. A fifth operating mode comprises building the print system. This mode comprises the following steps:
   - mounting fixture plate 55 with membranes 41 on the print table 50 and checking the height of the membranes 41 with laser height detecting unit 61;
   - measuring the flow-through positions of all membranes 41 by means of the first detection means (20,21). All positions are stored in computer 60a for printer control;
   - switching computer 60a for printer control to "build print system" configuration;
   - retrieving the print heads 58 with the cartridges, containing the bioactive fluids from storage;
   - letting the print heads 58 with cartridges acclimatize and vortex before installation;
   - cleaning the nozzle plates with cloth, adapted thereto, and passing this information to computer 60a;
   - mounting the first set of print heads 58, for instance eight, on print head holder 57, including electrical wiring;
   - printer device 10 automatically reads the positions of the mounted print heads 58, and retrieves the information of the bioactive fluids contained in the cartridges;
   - retrieving all other data needed to run and to check proper action of the print heads 58 from central computer 60b;
   - detecting the landing position of the droplets relative to the position of the nozzle from which it originates by the first detection means. This step comprises the following sub steps:

   - detecting the droplet originating from the first nozzle on the first print head and the droplet originating from the first nozzle of the last print head, and then adjusting the last print head such that the droplet originating from the first nozzle of the last print head has the same Y co-ordinate as the droplet originating from the first nozzle of the first print head.
   - repeating his procedure for droplets originating from all sixteen nozzles of the first print head and all droplets originating from all sixteen nozzles of the last print head. The last print head is preferably adjusted such that the mean Y-position of the droplets out of all sixteen nozzles of the last print head coincides with the mean Y-position of the droplets out of all sixteen nozzles of the first print head. Another preferred method is to check only the nozzles that will be used during printing. Still another preferred method checks only the nozzles used and the neighboring nozzles needed for automatic replacement in case a nozzle fails during printing;
   - continuously and automatically updating the use of bioactive fluid per print head needed for testing by central computer 60b;
   - repeating the above described operating steps for all print heads in between the first print head and the last print head;
   - based on the information generated with respect to the locations of the different bioactive fluids on printer device 10, the device configures itself by computer 60a, such that the desired pattern can be printed;
   - the printer device is ready for printing.
   A sixth operating mode comprises printing of membranes 41. This mode comprises the following steps:
   - switching the computer 60a for printer control to "printing membranes" configuration;
   - checking the ejecting behavior of the print heads 58 against the data retrieved from central computer 60b;
   - printing of the membranes 41 with the first 8 bioactive fluids;
   - checking by the optical system (20,21) for the presence of the programmed dots,
   - in case of a missing dot or missing dots, deciding by the system either to stop or to print the missing dots by using other nozzles of the failing print head(s),
   - mounting the next set of 8 print heads 58, aligned and tested according to the procedure described above;
   - repeating printing of the membranes 41 with the next 8 bioactive fluids, until all have been printed;
   - continuously recording the use of all fluids as well as environmental data, such as temperature, moisture and ozone concentration, storing and sending these data to central computer 60b;
   - continuously recording the acoustical response of all ejected droplets by the third detection means, and associating a quality number to the recorded trace, and storing this quality number on the central computer 60b. A seventh operating mode comprises the after printing stage. This mode comprises the following steps:

   - demounting the print heads 58 from the print head holder 57 of printer device 10;
   - covering the nozzles of print heads 58 with protective tape;
   - placing the print heads 58 in refrigerated storage;
   - disposing empty, nearly empty or outdated print heads 58;
   - sending all after printing actions to central computer 60b.
   In figure 8, multi-nozzle linear array print heads 58 of printer device 10 are shown. Every print head 58 has for instance 6 nozzles, positioned on a straight line at a pitch 44, for instance of 254 mm, and one joint bioactive fluid reservoir (cartridge). If the print layout is chosen such that the 16 nozzles are arranged perpendicular to the print direction X, all the spots 42 (or 43) of a particular bioactive fluid to be deposited can be placed with one movement of stage 54 in the X-direction, while the print heads 58 are kept at a fixed location. In the direction perpendicular to the print direction X therefore, the positions of the spots 42 (or 43) are determined by the geometry and arrangement of the print heads 58. As shown in figure 8, multiple bioactive fluids can be printed with one movement of the assembly of print heads 58 in the X-direction.
   According to the method of the invention any pattern of spots may in principle be printed on the membranes 41. It has advantages to be able to print a hexagonal pattern of spots, as this pattern optimizes the number of spots per unit area. With reference to figure 9, a particularly preferred method positions droplets on a membrane 41 in a hexagonal pattern of membrane locations (42, 43) by consecutively printing a first rectangular pattern of substrate locations 42, and a second rectangular pattern of substrate locations 43 onto membrane 41, with the proviso that the second rectangular pattern of locations 43 is displaced with respect to the first rectangular pattern of locations 42. In particular the first and second rectangular pattern of substrate locations 42 and 43, have a pitch 44 and 45 in the two orthogonal directions X and Y, as indicated in figure 9. The displacement equals half of the pitch in the two directions (by adjusting Y₁ to Y_{N}) To speed up the printing process further, preferably spots consisting of the same bioactive fluid are positioned either on the first or on the second pattern solely. In this way a print head 58 with a certain bioactive fluid will only be used once during the printing process and the particular print head 58 only has to be mounted once. This holds for all fluids. With this particularly preferred embodiment of the method of the invention, it becomes possible to first print with a group of print heads 58, loaded with all "first" fluids, then exchanging with the group of print heads 58, loaded with all "second" fluids, and then repeat printing with this "second" group. By this method, a hexagonal pattern with a high density may be printed using a minimum of print strokes and print head exchanges.
   The printer device and method according to the invention can be used for printing large batches of substrates with a flexible number of print heads. Furthermore, it can be used for printing a high number of bioactive fluids, whereby the quality of printing for all bioactive fluids is substantially identical. Although the printer device has been described with respect to preferred embodiments, several other embodiments can be envisaged falling within the scope of protection, as defined by the claims. It is for instance possible to extend the number of print heads considerably, whereby production speed is further increased. The printer device will in this embodiment have an increased length in the X-direction. Another possibility might be to apply the basic idea of the invention to continuous printing. Instead of a X-Y stage, in such embodiment an endless conveyor belt is used for mounting the substrates. Between the print heads, cameras are then positioned for measuring the position of the substrates. The Y-position of the print heads is then corrected accordingly during printing.

## Claims

1. Printer device (10) for producing biological test arrays by depositing droplets of a bioactive fluid onto substrates (41) in a plurality of substrate locations (42, 43), the device comprising
- at least one print head (58) provided with at least one nozzle (46) for depositing droplets of the bioactive fluid onto the substrates (41),
- positioning means (52, 54, 57 (Y₁ to Y_{N})) for positioning the print head (58) relative to the substrates (41),
- first detection means (30, 31, 32) for detecting the droplet trajectory relative to the position of the nozzle (46) from which it originates,
- second detection means (20, 21) for detecting the position of the substrates (41) and/or the printed dots on substrates (41), and
- control means (60) coupled to the detection means and the positioning means,
wherein the control means (60) are programmed to compare the position of a substrate (41) and the landing position of the droplets, calculated from the detected droplet trajectory, and adjust the position of the print head (58) relative to said substrate (41) upon depositing a droplet onto said substrate (41).

2. Printer device (10) according to claim 1, **characterized in that** the printing device (10) comprises an array of multiple print heads (58), arranged in a print head holder (57), wherein each print head (58) has its own linear precision stage for adjusting its Y position (Y₁ to Y_{N}).

3. Printer device (10) according to claim 1 or 2, **characterized in that** the printing device (10) comprises print heads (58) with multiple nozzles (46), and the control means (60) are programmed to compare the position of a substrate (41) and the mean landing position of all droplets, originating from a print head (58), and adjust the position of the print head (58) relative to said substrate (41) upon depositing droplets onto said substrate (41).

4. Printer device (10) according to any one of the preceding claims, **characterized in that** the first detection means (30, 31, 32) comprise two image sensors (30), aimed at detecting the trajectory of the droplets.

5. Printer device (10) according to claim 4, **characterized in that** the first detection means (30, 31, 32) comprise at least one microscope objective, equipped with the image sensor (30), at least one stroboscope unit (32), at least one adjustable mirror (31) to guide the optical axis of the droplet measurement volume to the at least one microscope objective, and means to measure the position of the droplet relative to the position of the nozzle (46) from which it originates.

6. Printer device (10) according to any one of the preceding claims, **characterized in that** the second detection means (20, 21) comprise illumination means (20) for illuminating the substrates (41) from one side, and at least one image sensor (21) positioned on the other side of the substrates (41), and aimed at detecting the light transmitted through the substrates (41).

7. Printer device (10) according to any one of the preceding claims, **characterized in that** the printer device is provided with third detection means, comprising an acoustical sensor.

8. Printer device (10) according to claim 7, **characterized in that** the third detection means are adapted to measure an acoustical characteristic of the nozzle (46), and wherein the control means (60) are programmed to determine a defect by comparison of the measured characteristic of the nozzle (46) with a predetermined characteristic of the nozzle (46).

9. Printer device (10) according to any one of the preceding claims, **characterized in that** the printer device comprises print heads (58), provided with identification means and the device further comprises reading means to read information contained in the identification means.

10. Use of the printer device (10) according to any one of the preceding claims in the production of biological test arrays comprising a substrate (41) with a plurality of bioactive fluids deposited thereon.

11. Method for producing a biological test array by depositing droplets of a bioactive fluid onto substrates (41) in a plurality of substrate locations (42, 43), using a printer device (10) according to any one of the preceding claims, the method comprising the steps of
a) detecting the position of the substrates (41);
b) for each nozzle (46), calculating the landing position of a droplet relative to the position of the nozzle (46) from which it originates by measuring its trajectory;
c) repositioning the print head (58) relative to the substrates (41) over a substrate location (42, 43) by using the result of step a);
d) adjusting the position of the print head (58) for said substrate location (42, 43) taking into account the result of step b);
e) depositing the droplet of bioactive fluid onto the substrate location (42, 43) by the nozzle (46).

12. Method according to claim 11, **characterized in that** the print head (58) comprises multiple nozzles (46) and the method comprising the steps of
a) detecting the position of the substrates (41);
b) for any print head (58), detecting the mean landing position of the droplets relative to the position of the print head (58) from which these originate;
c) repositioning the print head (58) relative to the substrates (41) over a substrate location (42, 43) by using the result op step a);
d) adjusting the position of the print head (58) for said substrate location (42, 43) taking into account the result of step b);
e) depositing the droplets of bioactive fluid onto the substrate location (42, 43) by the nozzles (46).

13. Method according to any one of claims 11-12, **characterized in that** before actual printing of the substrates (41) the trajectory of a droplet from a nozzle (46) is detected by taking an image with an image sensor (30), and storing the image in the control means.

14. Method according to claim 13, **characterized in that** the position of a droplet relative to the position of the nozzle (46) from which it originates is determined from the image.

15. Method according to any one of claims 11-14, **characterized in that** before actual printing of the substrates (41) the substrates (41) are illuminated from one side, and the light transmitted through the substrates (41) is detected at the other side of the substrates (41) by an image sensor (21), such that the position of the substrates (41) can be determined.

16. Method according to any one of claims 11-15, **characterized in that** the printer device (10) is provided with third detection means, comprising an acoustical sensor.

17. Method according to any one of claims 11-16, **characterized in that** droplets are positioned on a substrate (41) in a hexagonal pattern of substrate locations (42, 43) by consecutively printing a first and a second rectangular pattern of substrate locations onto the substrate, with the proviso that the second rectangular pattern is displaced with respect to the first rectangular pattern.

18. Method according to 17, **characterized in that** the first and second rectangular pattern have a pitch (44, 45) in two orthogonal directions, and the displacement equals half of the pitch in the two directions.

19. Biological test array comprising a substrate (41) with a plurality of bioactive fluids deposited thereon in a plurality of substrate locations (42, 43), obtainable by the method according to any one of claims 11-18.

20. Biological test kit comprising a biological test array according to claim 19.
